# EUROPÄISCHE PATENTSCHRIFT

(11) **EP 3 083 493 B1**
(45) Veröffentlichungstag und Bekanntmachung des Hinweises auf die Patenterteilung: **04.03.2020**
(21) Anmeldenummer: 14824373.6
(22) Anmeldetag: 16.12.2014
(51) Int. Cl.: C01B 3/24, C01B 3/34, C01B 3/48, B01J 19/12, C07C 1/04

(54) **VERFAHREN ZUR HERSTELLUNG VON SYNTHESEGAS**
METHOD FOR PRODUCING SYNGAS
PROCÉDÉ DE PRODUCTION DE GAZ DE SYNTHÈSE

(30) Priorität: 16.12.2013 DE 102013020905
(43) Veröffentlichungstag der Anmeldung: 26.10.2016
(73) Patentinhaber: Spitzl, Ralf, 53842 Troisdorf (DE)
(72) Erfinder: Spitzl, Ralf, 53842 Troisdorf (DE)
(74) Vertreter: Flaccus, Rolf-Dieter
(86) Internationale Anmeldenummer: PCT/EP2014/003387
(87) Internationale Veröffentlichungsnummer: WO 2015/090575

(56) Entgegenhaltungen:
- EP-A1- 2 199 254
- EP-A1- 2 540 663
- WO-A1-2012/006155
- US-A1- 2004 102 532
- US-A1- 2007 186 474

## Beschreibung

Die Erfindung betrifft Verfahren zur Herstellung von Synthesegas mit einem gewünschten oder einstellbaren molaren Verhältnis von Wasserstoff zu Kohlenmonoxid.

Mit "Synthesegas" werden Gasmischungen bezeichnet, die im Wesentlichen aus Wasserstoff und Kohlenmonoxid bestehen, wobei auch Beimengungen von Kohlendioxid, Stickstoff, Edelgasen, Methan und anderen Kohlenwasserstoffen enthalten sein können. Synthesegas wird als Zwischenprodukt oder Ausgangsstoff für zahlreiche Syntheseprozesse verwendet, beispielsweise zur Herstellung vom Methanol und anderen Alkoholen, Dimethylether, synthetischen Kraftstoffen (FISCHER-TROPSCH-Synthese), synthetischem Erdgas (SNG), Ammoniak (HABER-BOSCH-Verfahren), sowie für Oxosynthesen. Die damit erhältlichen Grundstoffe stellen wichtige Ausgangsstoffe bzw. Zwischenprodukte für die chemische Industrie dar, beispielsweise für die Herstellung von pharmazeutischen Wirkstoffen, Pflanzenschutzmitteln und Kunststoffen.

EP2199 254 offenbart ein Verfahren zur Herstellung eines Synthesegas mit einem gewünschten, einstellbaren molaren CO:H2 Verhältnis, wobei Synthesegas aus einem kohlenwasserstoffhaltigen Edukt erzeugt wird.

Synthesegas wird üblicherweise durch katalytische Umsetzung von kohlenstoff- bzw. kohlenwasserstoffhaltigen Rohstoffen (wie z. B. Kohle, Erdgas, Methan) gewonnen. Hierbei sind insbesondere folgende chemische Reaktionen von Bedeutung:

(I) CₙH₂ₙ₊₂ + n·H₂O → n ·CO + (2n + 1) ·H₂ (Dampfreformierung);

(II) CₙH₂ₙ₊₂ + n·CO₂ → 2n ·CO + (n + 1) ·H₂ (trockene Reformierung);

(III) CO + H₂O → CO₂ + H₂ (Wassergas-Shift-Reaktion).

Die Reaktionen (I) und (II) sind endotherm; die technische Durchführung dieser Verfahren erfolgt üblicherweise bei erhöhten Temperaturen (ca. 700-850 °C) unter Einsatz von Katalysatoren, beispielsweise Nickeloxidkatalysatoren oder Mischmetalloxide.

Das so erhaltene Synthesegas weist CO und H₂ in einem bestimmten molaren Verhältnis ("Molverhältnis CO/H₂") auf, das von der Art und der - möglicherweise schwankenden - Zusammensetzung der verwendeten Rohstoffe, sowie vom eingesetzten Verfahren abhängig ist.

Beispielsweise liefert ein Verfahren nach obiger Gleichung (I) bei Verwendung von Methan als Ausgangsstoff ein wasserstoffreiches Synthesegas mit einem Molverhältnis CO/H₂ von 1:3; im Falle von Ethan ein Synthesegas mit einem Molverhältnis CO/H₂ von 2:5, usw..

Entsprechend liefert ein Verfahren nach obiger Gleichung (II) bei Verwendung von Methan als Ausgangsstoff ein wasserstoffarmes Synthesegas mit einem Molverhältnis CO/H₂ von 1:1, im Falle von Ethan ein Synthesegas mit einem Molverhältnis CO/H₂ von 4:3, usw..

Für die Verwendung als Ausgangsstoff in nachfolgenden Syntheseverfahren ist es erforderlich oder wünschenswert, dass das Molverhältnis CO/H₂ des Synthesegases einen bestimmten Wert aufweist oder in einem bestimmten Bereich liegt, und dass dieser Wert oder Bereich möglichst konstant eingehalten wird, auch bei ggf. schwankender Eduktzusammensetzung.

Beispielsweise ist bei Synthesegas, das für die Herstellung von Dimethylether verwendet werden soll, ein Molverhältnis CO/H₂ von 1:1, für die Herstellung von Kraftstoffen (Fischer-Tropsch-Verfahren) oder Methanol ein CO/H₂-Verhältnis von 1:2 und für Oxo-Synthesen ein Verhältnis im Bereich von 2:3 bis 2:5 erforderlich oder wünschenswert.

Um Synthesegas mit einem gewünschten CO/H₂-Verhältnis zu produzieren, sind u. a. Methoden zur kryogenen Trennung von Rohsynthesegas in wasserstoffreiche und kohlenmonoxidreiche Produktströme vorgeschlagen worden (EP 0 898 136 A2). Diese Methoden sind in mehrfacher Hinsicht nachteilig, insbesondere weil für die kryogene Trennung mehrere Kühleinrichtungen sowie entsprechende Einrichtungen zum Trennen von Flüssig- und Dampfphasen erforderlich sind.

Ferner besteht die Möglichkeit, den CO-Gehalt im Synthesegas mittels Wassergas-Shift-Reaktion (III) zu verringern; dies hat allerdings den Nachteil, dass dabei CO₂ gebildet wird.

Eine andere bekannte Möglichkeit der Einstellung des CO/H₂-Verhältnisses besteht in der Zugabe von Wasserstoff, der allerdings mittels anderer, energieaufwendiger Verfahren (z. B. Elektrolyse) erzeugt werden muss (DE 10 2010 027 474 A1).

Ein weiteres Problem bei der Erzeugung von Synthesegas besteht darin, dass die zur Verfügung stehenden Rohgase (Eduktgase) starke Verunreinigungen oder Beimengungen anderer Gase aufweisen können (z. B. H₂S). Dies trifft z. B. auf Eduktgase zu, die in Biogasanlagen oder Pyrolyseanlagen erzeugt werden (Biogas, Pyrolysegas). Da diese Verunreinigungen oft als Katalysatorgifte für die bei der Synthesegasherstellung eingesetzten Katalysatoren wirken, ist häufig eine aufwendige Vorreinigung der Rohgase notwendig, um diese Verunreinigungen abzutrennen (z. B. Entschwefelung). Aufgabe der vorliegenden Erfindung war es deshalb, Verfahren bereitzustellen, welche die Herstellung von Synthesegas mit gewünschten, einstellbaren molaren CO/H₂-Verhältnis ermöglichen, und zwar unabhängig von der Zusammensetzung der Ausgangsstoffe, die Schwankungen unterworfen sein kann. Zudem ermöglichen bestimmte Ausführungsformen der Erfindung eine hohe Dynamik der Prozesse, bis hin zu einem Start/Stop Betrieb.

Gemäß einem weiteren Aspekt der Erfindung bestand die zugrundeliegende Aufgabe darin, Verfahren bereitzustellen, welche eine Herstellung von Synthesegas in der Weise ermöglichen, dass auf die Verwendung der herkömmlicherweise benötigten Katalysatoren ganz oder teilweise verzichtet werden kann. Die Verwendung von Katalysatoren kann nachteilig sein, da einige der für die Synthesegasherstellung eingesetzten Ausgangsstoffe Bestandteile enthalten können, die als Katalysatorgifte wirken (z. B. H₂S). Zur Lösung der oben genannten Aufgabe, die sich auf die Einstellung des CO/H₂-Verhältnisses bezieht, wird gemäß vorliegender Erfindung ein Verfahren zur Herstellung eines Synthesegasproduktes mit einem gewünschten, einstellbaren molaren CO/H₂-Verhältnis V bereit gestellt.

Das Verfahren umfasst die Schritte von Anspruch 1.

Durch eine Änderung des Mischungsverhältnisses bzw. der Durchsatzgeschwindigkeit mindestens eines Teilverfahrens kann das molare CO/H₂-Verhältnis V des resultierenden Synthesegases auch bei einer Schwankung der Eduktzusammensetzung oder bei einem Wechsel zwischen verschiedenen Ausgangsstoffen (mit unterschiedlicher Zusammensetzung) auf den gewünschten Wert oder in einem gewünschten Bereich eingestellt werden.

Eine Kombination von zwei oder mehreren Teilverfahren, wie vorstehend beschrieben, kann auch einen Schritt umfassen, bei dem das in einem Teilverfahren erzeugte Produkt einer Speicherung zugeführt und gespeichert wird, bis es in mindestens einem weiteren Teilverfahren weiter umgesetzt wird, um ein Synthesegasprodukt mit dem gewünschten molaren CO/H₂-Verhältnis zu erhalten.

Desgleichen kann das Synthesegasprodukt entweder direkt in einem Nachfolgeprozess als Reaktand eingesetzt oder zunächst einer Speicherung zugeführt werden.

Auch wenn vorstehend lediglich zwei Teilverfahren mit unterschiedlichem CO/H₂-Verhältnis (V₁ ≠ V₂) erwähnt wurden, schließt dies eine Kombination mit einem oder mehreren zusätzlichen Teilverfahren (z. B. T₃, T₄) nicht aus, die geeignet sind, das CO/H₂-Verhältnis des Synthesegases zu beeinflussen.

Die erfindungsgemäßen Verfahren zeichnen sich dadurch aus, dass das CO/H₂-Verhältnis V₁ eines ersten Teilverfahrens kleiner ist als das CO/H₂-Verhältnis V₂ eines zweiten oder weiteren Teilverfahrens, oder umgekehrt. Dabei wird bevorzugt, dass V₁ ≤ 1 und V₂ ≥ 1 ist (oder umgekehrt). Im ersten Fall wird ein wasserstoffreiches, im zweiten Fall ein wasserstoffarmes Synthesegas erzeugt.

Demnach ist gemäß vorliegender Erfindung die Kombination mindestens zweier Teilverfahren vorgesehen, wobei mindestens eines der genannten Teilverfahren (T₁, T₂) ein wasserstoffarmes Synthesegas erzeugt, dessen molares Verhältnis von CO zu H₂ mindestens 1 beträgt, und mindestens ein zweites oder weiteres Teilverfahren (T₂, T₁) ein wasserstoffreiches Synthesegas erzeugt, dessen molares Verhältnis von CO zu H₂ kleiner gleich 1 ist.

Als Verfahren zur Erzeugung eines wasserstoffreichen Synthesegases kann insbesondere ein Verfahren verwendet werden, das auf folgender Reaktionsgleichung beruht:

(I) CₙH₂ₙ₊₂ + n·H₂O → n·CO + (2n + 1) ·H₂,

wobei CₙH₂ₙ₊₂ ein Alkan repräsentiert und n vorzugsweise 1 bis 20 beträgt, insbesondere 1 bis 8, besonders bevorzugt 1 bis 4. Mit zunehmender Kettenlänge nähert sich das molare CO/H₂-Verhältnis dem Wert 1/2 an.

Die Formel CₙH₂ₙ₊₂ bezieht sich allgemein auf Alkane, jedoch können auch andere Kohlenwasserstoffverbindungen eingesetzt werden (z. B. ungesättigte Kohlenwasserstoffe, Aromaten), sowie Mischungen verschiedener Kohlenwasserstoffverbindungen. Vorzugsweise werden Kohlenwasserstoffe verwendet, die unter Normalbedingungen (20 °C, 1013 hPa) gasförmig oder flüssig sind. Ebenso ist aber auch die Verwendung von festem Kohlenstoff (z.B. Graphit) oder festen Kohlenwasserstoffen möglich.

Im Falle von Methan (bevorzugtes Edukt) verläuft die Reaktion nach der Gleichung

(Ia) CH₄ + H₂O → CO + 3 H₂,

wobei das molare Verhältnis CO/H₂ den Wert 1/3 annimmt. Bei der Verwendung von Erdgas (Hauptbestandteil: Methan) erhält man demnach ein wasserstoffreiches Synthesegas mit einem CO/H₂-Verhältnis von ca. 1:3.

Als Verfahren zur Erzeugung eines wasserstoffarmen Synthesegases kann insbesondere ein Verfahren verwendet werden, das auf folgender Reaktionsgleichung beruht:

(II) CₙH₂ₙ₊₂ + n·CO₂ → 2n ·CO + (n + 1) ·H₂,

wobei CₙH₂ₙ₊₂ ein Alkan repräsentiert und n vorzugsweise 1 bis 20 beträgt, insbesondere 1 bis 8, besonders bevorzugt 1 bis 4. Mit zunehmender Kettenlänge nähert sich das molare CO/H₂-Verhältnis dem Wert 2 an.

Im Falle von Methan (bevorzugtes Edukt) verläuft die Reaktion nach der Gleichung CH₄ + CO₂ → 2 CO + 2 H₂, wobei das molare Verhältnis CO/H₂ den Wert 1 annimmt. Bei der Verwendung von Erdgas (Hauptbestandteil: Methan) erhält man demnach ein wasserstoffarmes Synthesegas mit einem CO/H₂-Verhältnis von ca. 1:1.

Bei den vorstehend beschriebenen Verfahren zur Erzeugung eines wasserstoffarmen bzw. wasserstoffreichen Synthesegases können neben den erwähnten Alkanen auch andere Kohlenwasserstoffe als Edukt(e) eingesetzt werden, z. B. ungesättigte Kohlenwasserstoffe (Olefine wie z. B. Ethylen; Alkine; Cycloalkane, aromatische Verbindungen)), auch in Form von Gemischen.

Allgemein können als kohlenwasserstoffhaltige Edukte Gase oder Gasgemische verwendet werden, die einen Kohlenwasserstoffanteil, insbesondere einen Methangehalt, von vorzugsweise mindestens 20 Vol.-%, insbesondere von mindestens 40 Vol.-%, aufweisen. Aber auch die Verwendung flüssiger oder fester kohlenwasserstoffhaltiger Ausgangsstoffe oder von Kohle ist nicht ausgeschlossen.

Als Beispiele für geeignete kohlenwasserstoffhaltige Edukte sind insbesondere folgende zu nennen: Biogas oder Rohbiogas, Flare-Gas (Fackelgas), Pyrolysegase, Erdgas.

Als Katalysatoren für die vorstehend genannten Teilverfahren zur Erzeugung eines wasserstoffarmen bzw. wasserstoffreichen Synthesegases (Reaktionsgleichungen (I), (II)) können die im Stand der Technik bekannten Katalysatoren - wie in der Einleitung erwähnt - verwendet werden. Die Reaktionstemperatur wird bei diesen Teilverfahren üblicherweise im Bereich von 600-900 °C, vorzugsweise 700-850 °C, eingestellt.

Gemäß einer bevorzugten Ausführungsform der Erfindung ist vorgesehen, dass
mindestens eines der genannten Teilverfahren ein wasserstoffarmes Synthesegas (A) gemäß folgender Reaktionsgleichung erzeugt:

(II) CₙH₂ₙ₊₂ + n·CO₂ → 2n ·CO + (n + 1) ·H₂,

wobei CₙH₂ₙ₊₂ ein Alkan repräsentiert und n vorzugsweise 1 bis 20 beträgt, insbesondere 1 bis 8, besonders bevorzugt 1 bis 4;
wobei die Reaktion

(IIa) CH₄ + CO₂ → 2 CO + 2 H₂

bevorzugt ist;
und dass mindestens eines weiteres der genannten Teilverfahren ein wasserstoffreiches Synthesegas (B) gemäß folgender Reaktionsgleichung erzeugt:

(I) CₙH₂ₙ₊₂ + n·H₂O → n·CO + (2n + 1)·H₂,

wobei CₙH₂ₙ₊₂ ein Alkan repräsentiert und n vorzugsweise 1 bis 20 beträgt, insbesondere 1 bis 8, besonders bevorzugt 1 bis 4;
wobei die Reaktion

(Ia) CH₄ + H₂O → CO + 3 H₂

bevorzugt ist.

Die in den Teilverfahren erzeugten Synthesegase (z. B. die oben erwähnten Synthesegase (A) und (B)) werden vereinigt oder zusammengeführt, wobei das Mischungsverhältnis derart eingestellt oder geregelt wird, dass ein Synthesgasprodukt mit dem gewünschten molaren CO/H₂-Verhältnis V erhalten wird.

Durch eine kontinuierliche Messung der Gaszusammensetzung in den Produktgasströmen der Teilverfahren lassen sich die Teilverfahren so steuern oder regeln, dass sich das CO/H₂-Verhältnis des durch Kombination gebildeten Gesamt-Produktgasstroms (d. h. des Synthesegasprodukts) konstant halten lässt, und zwar auch bei schwankender Zusammensetzung des Eduktgases bzw. der Eduktgase.

Das Einstellen des Mischungsverhältnisses der Synthesegase A und B kann vorzugsweise dadurch erreicht werden, dass das eine der beiden Teilverfahren mit einem höheren oder niederen Durchsatz gefahren wird als das jeweilige andere Teilverfahren.

So kann z. B. dasjenige Teilverfahren, welches ein wasserstoffreiches Synthesegas erzeugt, mit einem höheren Durchsatz betrieben werden als das jeweils andere Teilverfahren (welches ein wasserstoffarmes Synthesegas erzeugt), vorzugsweise mit einem 1,5-fachen bis 10-fachen, besonders bevorzugt mit einem 2-fachen bis 5-fachen Durchsatz, bezogen auf des genannte andere Teilverfahren.

Das obige Prinzip wird anhand des nachfolgenden Beispiels veranschaulicht, welches die Herstellung von Synthesegas aus Methan beschreibt.

Das Teilverfahren zur Erzeugung eines wasserstoffreichen Synthesegases wird nach obiger Gleichung (I) durchgeführt:

(Ia) CH₄ + H₂O → CO + 3 H₂,

wobei das CO/H₂-Verhältnis 1/3 beträgt.
Das Teilverfahren zur Erzeugung eines wasserstoffarmen Synthesegases wird nach obiger Gleichung (II) durchgeführt:

(IIa) CH₄ + CO₂ → 2 CO + 2 H₂,

wobei das CO/H₂-Verhältnis 1/1 beträgt.

Um beispielsweise ein Synthesegas mit einem gewünschten CO/H₂-Verhältnis von 1/2 zu erhalten, wird das erste Teilverfahren (Ia) mit dem zweifachen Durchsatz gefahren, bezogen auf den Durchsatz des zweiten Teilverfahrens (IIA):

(Ia) 2 CH₄ + 2 H₂O → 2 CO + 6 H₂,

(IIa) CH₄ + CO₂ → 2 CO + 2 H₂;

In der Summe ergibt sich:

3 CH₄ + 2 H₂O + CO₂ → 4 CO + 8 H₂.

Damit ergibt sich durch Kombination der beiden Teilverfahren (und Vereinigen bzw. Mischen der Produktströme) ein Synthesegas mit dem gewünschten CO/H₂-Verhältnis von 1/2. Dieses Synthesegas kann als Ausgangsstoff für nachfolgende Synthesen dienen. Zum Mischen der durch die Teilverfahren erzeugten Produktströme (Synthesegase) können bekannte Mischvorrichtungen zum Mischen von Gasen verwendet werden.

Zur Einstellung (oder Regelung) des CO/H₂-Verhältnisses in dem durch Kombination von zwei oder mehreren Teilverfahren erhaltenen Synthesegases kann vorzugsweise so vorgegangen werden, dass das molare Verhältnis von CO zu H₂ (V₁, V₂, ...) in den durch die Teilverfahren erzeugten Synthesegasen (A, B, ...) gemessen wird, vorzugsweise kontinuierlich. Abhängig von den jeweils ermittelten Werten für das CO/H₂-Verhältnis kann der Durchsatz in den einzelnen Teilverfahren so gesteuert oder geregelt werden, dass ein Synthesegas-Produkt mit dem genannten CO/H₂-Verhältnis V erhalten wird. Ebenso können die gemessenen Werte für das CO/H₂-Verhältnis herangezogen werden, um die in den Teilverfahren erzeugten Synthesegasprodukte in solchen Anteilen miteinander zu kombinieren oder zu mischen, dass ein Synthesegas-Produkt mit dem gewünschten CO/H₂-Verhältnis V resultiert. Zur Überwachung des Herstellungsverfahrens kann es auch vorteilhaft oder erforderlich sein, den CO- und H₂-Anteil (und damit auch das CO/H₂-Verhältnis) im Synthesegas-Produkt zu messen, vorzugsweise kontinuierlich.
Sensoren, Mess-Sonden und dazugehörige Messgeräte zur Bestimmung der Zusammensetzung eines Gases, insbesondere zur Bestimmung der Anteile von H₂, CO und CO₂, sind dem Fachmann bekannt (z. B. Wasserstoffsensoren, Kohlenmonoxidsensoren).
Gemäß vorliegender Erfindung ist ferner vorgesehen, dass das erwähnte erste Teilverfahren (T₁), und das erwähnte zweite oder weitere Teilverfahren (T₂), mit einem Teilverfahren T₃ kombiniert wird, mittels welchem der/die Kohlenwasserstoff(e) des vorstehend genannten kohlenwasserstoffhaltigen Edukts im Wesentlichen in festen Kohlenstoff und Wasserstoff gespalten wird/werden.

Bei diesem Teilverfahren (T₃) handelt es sich vorzugsweise um ein Verfahren, das auf einer pyrolytischen oder Plasmakatalytischen Zersetzung von Kohlenwasserstoffen gemäß nachfolgender Reaktionsgleichung beruht:

(IV) CₙH₂ₙ₊₂ → n·C_{fest} + (2n+2) ·H₂;

oder, falls Methan als Edukt verwendet wird:

(IVa) CH₄ → C_{fest} + 2 H₂.

Durch den hierbei entstehenden Wasserstoff kann dessen Anteil im Synthesegas erhöht und das molare CO/H₂-Verhältnis (d. h. der Quotient) verringert werden.
Der als Nebenprodukt anfallende Kohlenstoff kann abgetrennt und z. B. als Aktivkohle oder Pigmentruß (Carbon Black) verwendet werden. Die pyrolytische Zersetzung von Kohlenwasserstoffen wird vorzugsweise mittels Niedertemperatur-Plasmen oder hoher Temperaturen, z. B. thermisch oder im Lichtbogen, durchgeführt.
Gemäß vorliegender Erfindung ist vorgesehen, dass ein auf der pyrolytischen Zersetzung von Kohlenwasserstoffen beruhendes Teilverfahren mit einem Teilverfahren zur Erzeugung eines wasserstoffarmen Synthesegases und mit einem Teilverfahren zur Erzeugung eines wasserstoffreichen Synthesegases (wie weiter oben beschrieben) kombiniert wird. Gemäß einer Ausführungsform der vorliegenden Erfindung ist vorgesehen, dass ein auf der Pyrolyse von Kohlenwasserstoffen beruhendes Teilverfahren mit einem Teilverfahren zu Erzeugung eines Synthesegases kombiniert wird, vorzugsweise wie folgt:
1.

   Teilverfahren: CₙH₂ₙ₊₂ → n·C_{fest} + (2n+2) ·H₂ (IV)

   (Pyrolyse)
2.

   Teilverfahren: CₙH₂ₙ₊₂ + n·CO₂ → 2n ·CO + (n + 1) ·H₂ (II)

Beispielsweise ergibt sich bei Verwendung von Methan als Kohlenwasserstoff-Edukt durch Kombination der Teilverfahren

(IVa) CH₄ → C_{fest} + 2 H₂

(IIa) CH₄ + CO₂ → 2 CO + 2 H₂

als Ergebnis bzw. Summe:

2 CH₄ + CO₂ → 2 CO + 4 H₂

(CO/H₂-Verhältnis: 1:2 oder 0,5).

Gemäß einer weiteren Ausführungsform ist die optionale, kombinierte Durchführung eines weiteren Teilverfahrens T₄ vorgesehen, welches auf der Wassergas-Shift-Reaktion (III) beruht und eine Erhöhung des H₂-Anteils in dem Synthesegasprodukt bewirkt, einhergehend mit einer Verringerung des CO-Anteils.

(III) CO + H₂O → CO₂ + H₂.

Das Verfahren kann dem eigentlichen Verfahren zur Synthesegasherstellung (wie oben beschrieben) nachgeschaltet werden, wobei das zunächst erzeugte Synthesegasprodukt einer Wassergas-Shift-Reaktion unterzogen wird. Das bei der Shift-Reaktion anfallende CO₂ kann (nach Abtrennung des H₂) wieder für die Synthesegasherstellung genutzt werden (siehe oben, Reaktion (II), (IIa)).

Die Reaktionsbedingungen (Temperatur, Katalysatoren etc.) für die Wassergas-Shift-Reaktion sind dem Fachmann bekannt (z. B. Eisen(III)-oxid-Katalysatoren; 250-450 °C). Zur Durchführung der Reaktion kann ein spezieller Reaktor verwendet werden, in den das Synthesegas ggf. unter Zusatz von Wasser bzw. Wasserdampf eingespeist wird.

Durch Kombination zweier oder mehrerer Teilverfahren, wie vorstehend beschrieben, kann das molare CO/H₂-Verhältnis V des Synthesegas-Produkts über einen weiten Bereich eingestellt oder geregelt werden. Gemäß einer Ausführungsform der Erfindung wird dieses Verhältnis im Bereich von 1 bis 10, vorzugsweise im Bereich von 1 bis 5, besonders bevorzugt im Bereich von 1 bis 3 eingestellt oder geregelt. Gemäß einer weiteren Ausführungsform liegt dieses Verhältnis im Bereich von 0,1 bis 1, vorzugsweise im Bereich von 0,5 bis 1, besonders bevorzugt im Bereich von 0,7 bis 1. Des Weiteren bezieht sich die Erfindung insbesondere auf Verfahren, die ein Synthesegasprodukt erzeugen, dessen molares CO/H₂-Verhältnis 1:3, 1:2, 1:1, 2:1, 3:1, 2:5, 3:7 oder 4:9 beträgt.

Für mindestens eines der Teilverfahren für die Synthesegasherstellung, oder für mindestens einen Teilschritt, wird ein Plasmaverfahren und eine entsprechende Vorrichtung (Plasmareaktor) verwendet, wobei mikrowellengestützte Plasmaverfahren bzw. Mikrowellenplasmen besonders bevorzugt sind. Die genannten Teilverfahren können in gesonderten Reaktoren durchgeführt werden (z. B. in serieller oder paralleler Anordnung oder Betriebsweise), oder in einem gemeinsamen Reaktor.

Bei der Ausführungsform, die einen gemeinsamen Reaktor verwendet, lässt sich durch Steuerung der Verhältnis der Edukte (Kohlenwasserstoff, Kohlendioxid und Wasser) im Reaktor das CO/H₂ Verhältnis regeln.

Die Verwendung von Plasmaverfahren, insbesondere von mikrowellengestützten Plasmaverfahren, hat den Vorteil, dass eine Erhöhung der Reaktionsgeschwindigkeit bewirkt wird, ähnlich wie bei der Verwendung von Katalysatoren, weshalb derartige Verfahren auch als "plasmakatalytische Verfahren" bezeichnet werden. Infolgedessen kann auf die Verwendung von Katalysatoren, wie sie bei den herkömmlichen Verfahren zur Synthesegasherstellung erforderlich ist (siehe oben, Reaktionen (I), (II)), vollständig oder weitgehend verzichtet werden.

Als vorteilhaft hat sich außerdem erwiesen, dass Plasmaverfahren, insbesondere mikrowellengestützte Plasmaverfahren, eine hohe Selektivität und Energieeffizienz aufweisen. Zudem haben plasmakatalytische Verfahren den Vorteil, dass sie deutlich unanfälliger gegenüber konventionellen Katalysatorgiften (z. B. Schwefel) sind.

Infolgedessen ist der Einsatz mindestens eines Plasmaverfahrens, insbesondere mindestens eines mikrowellengestützten Plasmaverfahrens, besonders dann von Vorteil und erfindungsgemäß bevorzugt, wenn Eduktgase verwendet werden, die Verunreinigungen oder Beimengungen enthalten, die als Katalysatorgifte wirken können und die herkömmlicherweise bei der Synthesegaserzeugung verwendeten Katalysatoren hemmen oder inaktivieren. Bei diesen Beimengungen kann es sich beispielsweise um höhere Kohlenwasserstoffe (> 4 C-Atome), CO₂, H₂O, Lösemittel, H₂S oder andere Verunreinigungen (wie z. B. Asche, flüssige Kohlenwasserstoffe, fester Kohlenstoff, Siloxane) handeln.

Als Beispiele für Eduktgase, die häufig Beimengungen oder Verunreinigungen aufweisen, sind insbesondere Biogas, Flare-Gase und Pyrolysegase zu nennen. Solche Eduktgase müssen herkömmlicherweise aufwendig gereinigt werden, um die Verunreinigungen zu entfernen. Bei der erfindungsgemäßen Verwendung von Plasmaverfahren, insbesondere von mikrowellengestützten Plasmaverfahren, kann auf eine aufwendige Vorreinigung der Eduktgase verzichtet werden. Im Allgemeinen kann das mit Verunreinigungen behaftete Eduktgas (z. B. Roh-Biogas, Flare-Gas, Pyrolysegas) direkt in einen Plasmareaktor zur plasmakatalytischen Umsetzung zwecks Erzeugung von Synthesegas eingespeist werden.

Plasmareaktoren, insbesondere Plasmareaktoren zur Erzeugung von Mikrowellenplasmen, sind bereits im Stand der Technik beschrieben worden (z. B. WO 2004/010454; DE 10 2012 007 230 A1); derartige Plasmareaktoren sind prinzipiell für die Durchführung der erfindungsgemäßen Verfahren geeignet. Allgemein sind solche Mikrowellenplasmaquellen und -reaktoren geeignet und bevorzugt, die in der Lage sind, ein vorzugsweise nicht-thermisches, auch im Dauer- oder Langzeitbetrieb stabiles, großvolumiges (z. B. bis 5 1 oder größer) Plasma zu erzeugen und hohe Gasgeschwindigkeiten zu ermöglichen (z. B. 1 m/s bis 500 m/s, oder höher; vorzugsweise 5 bis 200 m/s, besonders bevorzugt 10 bis 150 m/s). Jedoch sind auch Überschallströmungsgeschwindigkeiten möglich.

Vorzugsweise werden die erfindungsgemäßen Verfahren kontinuierlich betrieben, d. h. unter stetiger Zuführung von Eduktgas(en) (und wahlweise weiteren Prozessgasen) in den Mikrowellenreaktor und unter stetiger Entnahme des die (Zwischen-)Produkte enthaltenden Produktstroms (Synthesegasstroms) aus dem Reaktor. Nicht umgesetzte Edukte können ganz oder teilweise aus dem Synthesegasstrom abgetrennt und wieder in den Reaktor zurückgeführt werden.

Vorzugsweise wird das Mikrowellenplasma bei den erfindungsgemäßen plasmakatalytischen Verfahren im Druckbereich von 10 bis 10.000 hPa, insbesondere im Bereich von 20 bis 3.000 hPa, insbesondere im Bereich von 50 bis 1.500 hPa betrieben, insbesondere unter Atmosphärendruckbedingungen (850 bis 1100 hPa, insbesondere 950 bis 1050 hPa).

Die erfindungsgemäßen plasmakatalytischen Verfahren werden üblicherweise bei Temperaturen im Bereich von ca. 50 bis 2000 °C, insbesondere 100 bis 1000 °C, durchgeführt. Falls erforderlich, kann die im Reaktionsraum bzw. Plasmareaktor herrschende Temperatur mittels bekannter Heiz- oder Kühlvorrichtungen (z. B. Gaskühlung, Flüssigkeits-Quenchen) in einem bestimmten Bereich eingestellt werden.

Vorzugsweise wird das Verfahren in der Weise durchgeführt, dass in dem Plasmareaktor ein Druckgefälle oder ein Druckgradient, insbesondere ein Unterdruck oder Überdruck relativ zum Umgebungsdruck (Atmosphärendruck), eingestellt wird. Dies kann insbesondere mittels einer oder mehrerer der folgenden Maßnahmen erreicht werden: Steuern oder Regeln des Zustroms der fluiden, insbesondere gasförmigen Ausgangsstoffe in den Reaktor, vorzugsweise mittels einer oder mehrerer Ventile oder/und Pumpen/Kompressoren; Steuern oder Regeln des Ausströmens von Gasen, insbesondere des produkthaltigen Plasmagases, aus dem Plasmareaktor, vorzugsweise mittels einer oder mehrerer Ventile oder/und Pumpen. Der statische Druck innerhalb der Vorrichtung kann beliebig gewählt bzw. dem jeweiligen Prozess angepasst werden.

Es hat sich überraschenderweise gezeigt, dass die Verwendung von Plasmareaktoren für die Durchführung der erfindungsgemäßen Verfahren zur Synthesegasherstellung aus einem weiteren Grund vorteilhaft ist, weil es auf diese Weise nämlich ermöglicht wird, zwei oder mehrere der genannten Teilverfahren in einem gemeinsamen Plasmareaktor durchzuführen und auf diese Weise zu kombinieren.

Hierbei wird eine Ausführungsform bevorzugt, bei der zumindest die auf den Reaktionsgleichungen (I) und (II) beruhenden Teilverfahren in einem gemeinsamen Plasmareaktor, insbesondere einem Mikrowellenplasmareaktor, kombiniert durchgeführt werden:

(I) CₙH₂ₙ₊₂ + n·H₂O → n ·CO + (2n + 1) ·H₂,

(II) CₙH₂ₙ₊₂ + n·CO₂ → 2n ·CO + (n + 1) ·H₂.

Allgemein wird dabei so vorgegangen, dass ein kohlenwasserstoffhaltiges Gas oder Gasgemisch (z. B. Methan, Erdgas, Biogas) unter Beimischung von CO₂ und Wasser (oder Wasserdampf) in einen Plasmareaktor eingebracht wird und dort unter Einwirkung eines Plasmas zu Synthesegas umgesetzt wird. Um eine Ablagerung von Kohlenstoff oder Kohlenstoffverbindungen um oder hinter dem Plasmareaktor zu vermeiden, kann der Prozess derart gefahren werden, dass das C/O Verhältnis < 1 (typisch 0.9) gehalten wird (Sauerstoffüberschuß).

Überschüssiger Sauerstoff kann bei Bedarf z.B. durch nachfolgende Oxidation in einem Kohlenstoffbett (z.B. Aktivkohle) entfernt werden.

Durch Variation der dem Eduktgas beigemischten Anteile von CO₂ und Wasser kann das molare CO/H₂-Verhältnis des resultierenden Synthesegases beeinflusst werden. Insbesondere kann auf diese Weise erreicht werden, dass auch bei einer schwankenden Zusammensetzung der Eduktgase das CO/H₂-Verhältnis konstant gehalten wird und insbesondere auf einen gewünschten Wert eingestellt wird.

Beispielsweise kann mit der vorstehend beschriebenen, kombinierten oder gemeinsamen Umsetzung nach der allgemeinen Reaktionsgleichung (V) ein Synthesegas mit einem CO/H₂-Verhältnis von 1:2 (= 0,5) erhalten werden:

(V) 3 CₙH₂ₙ₊₂ + CO₂ + (3n-1) ·H₂O → → (3n+1) ·CO + (6n+2) ·H₂.

Abhängig von der Zusammensetzung des Eduktgases und des beigemischten CO₂- bzw. Wasseranteils lassen sich Synthesegasprodukte mit einem anderen CO/H₂-Verhältnis erhalten.

Ferner erstreckt sich die vorliegende Erfindung auch auf Verfahren zur Synthesegasherstellung, bei denen ein erstes Teilverfahren mit mindestens einem zweiten oder weiteren Teilverfahren in der Weise kombiniert werden, dass diese Verfahren nacheinander oder "in Reihe" ausgeführt werden. Hierbei wird das in einem ersten Teilverfahren erzeugte Synthesegas in einem zweiten oder weiteren Teilverfahren umgesetzt, insbesondere um eine Veränderung oder Einstellung des CO/H₂-Verhältnisses zu erreichen.

Die vorstehend beschriebene Ausführungsform ist insbesondere dann vorteilhaft, wenn Edukte verwendet werden, die hohe CO₂-Anteile aufweisen (wie z. B. Biogas) oder CO₂ im Überschuss enthalten (bezogen auf den Kohlenwasserstoffanteil), z. B. Pyrolysegase oder Flare-Gase.

Biogas weist typischerweise 40-75 Vol.-% Methan und 25-55 Vol.-% CO₂ auf. Nach einer bevorzugten Ausführungsform der Erfindung wird das im Biogas enthaltene Methan-CO₂-Gemisch in einem ersten Teilverfahren gemäß Gleichung (IIa) zu einem (wasserstoffarmen) Synthesegas umgesetzt:

(IIa) CH₄ + CO₂ → 2 CO + 2 B_{2.}

Dieses wasserstoffarme Synthesegas wird in einem zweiten Teilverfahren unter Zusatz von Wasser (oder Wasserdampf) zu einem wasserstoffreicheren Synthesegas umgesetzt:

(III) CO + H₂O - CO₂ + H₂ (Wassergas-Shift).

Die vorstehend beschriebene Kombination zweier Teilverfahren zur Erzeugung eines wasserstoffreicheren Synthesegases kann mittels eines Plasmaverfahrens verwirklicht werden, wobei die beiden genannten Teltlverfahren vorzugsweise in einem gemeinsamen Plasmareaktor durchgeführt werden. Alternativ könnten die beiden Teilverfahren auch aufeinanderfolgend ausgeführt werden, ebenfalls unter Verwendung von Plasmaverfahren.

Die plasmagestützte Durchführung dieser Verfahren ist insbesondere dann vorteilhaft, wenn Rohbiogas oder Flare-Gase als Edukte verwendet werden. Von Vorteil ist dabei auch, dass auf eine aufwendige Vorreinigung des Rohbiogases bzw. Flare-Gases verzichtet werden kann, da die verwendeten Plasmaverfahren durch eventuell vorhandene Beimengungen oder Verunreinigungen nicht oder nur unwesentlich beeinträchtigt werden.

Wie vorstehend erläutert, eignen sich die erfindungsgemäßen Verfahren zur Herstellung von Synthesegas ausgehend von Eduktgasgemischen, z.B. Biogas oder Flare-Gas, welche Methan und CO₂ enthalten. Allgemein kann es sich dabei um ein Eduktgasgemisch handeln, das einen Methangehalt von mindestens 40 Vol.-%, vorzugsweise von mindestens 50 Vol.-%, insbesondere von 50 bis 75 Vol.-%, und einen CO₂-Gehalt von mindestens 25 Vol.-%, vorzugsweise von mindestens 35 Vol.-%, insbesondere von 35 bis 55 Vol.-% aufweist.

Ein weiterer Vorteil der erfindungsgemäßen Verfahren liegt darin begründet, dass sie die Nutzung von Pyrolysegas und Pyrolyseöl als Edukt(e) für die Synthesegasherstellung ermöglichen. Pyrolysegas und -öl fallen bei der Vergasung von Biomasse (z. B. Holz) und anderen Einsatzstoffen (z. B. Abfälle, Altreifen, Kunststoffe) unter Pyrolysebedingungen an. Die Zusammensetzung des Pyrolysegases hängt u. a. von der Art des verwendeten Einsatzstoffs (Biomasse, etc.) und von den Reaktionsbedingungen ab (Temperatur, Reaktionszeit, Druckverhältnisse). Üblicherweise enthält Pyrolysegas (z. B. Holzgas) relativ geringe Anteile an Kohlenwasserstoffen (z. B. 2 Vol.-% Methan), jedoch relativ hohe Anteile an CO₂ und N₂ (zusammen z. B. bis 60 Vol.-%). Im Zusammenhang mit der vorliegenden Erfindung werden mit "Pyrolysegas" allgemein Gase bezeichnet, die durch pyrolytische Zersetzung von kohlenwasserstoffhaltigem Material, insbesondere von Biomasse, erhalten werden können.

Die vorliegende Erfindung bezieht sich gemäß einer weiteren Ausführungsform auf ein Verfahren zur Herstellung von Synthesegas aus kohlenwasserstoffhaltigen Edukten, die - bezogen auf den Kohlenwasserstoffanteil (in Vol.-%) - CO₂ im Überschuss enthalten, wie z. B. Pyrolysegas. Hierbei wird allgemein so vorgegangen, dass das Eduktgas vor oder während der Umsetzung zu Synthesegas mit Kohlenwasserstoffen oder einem kohlenwasserstoffhaltigen Gemisch, vorzugsweise Erdgas, angereichert wird.

Ausgehend von einem Pyrolysegas, welches CO₂ im Überschuss enthält, erfolgt die Herstellung von Synthesegas in der Weise, dass das Pyrolysegas mit vorzugsweise gasförmigen Kohlenwasserstoffen (z. B. Erdgas, insbesondere Methan) angereichert in einem Plasmareaktor, insbesondere einem Mikrowellenplasmareaktor, umgesetzt wird. Die Anreicherung mit Kohlenwasserstoffen kann auch schon vor der Einleitung des Pyrolysegases in den Reaktor vorgenommen werden.

Durch die erfindungsgemäße Anreicherung mit Kohlenwasserstoffen wird insbesondere bewirkt, dass das ursprünglich im Überschuss vorhandene CO₂ gemäß folgender Reaktionsgleichung

(II) CₙH₂ₙ₊₂ + n·CO₂ → 2n ·CO + (n + 1) ·H₂

zu Synthesegas (CO, H₂) umgesetzt wird. CₙH₂ₙ₊₂ steht für Alkane, jedoch können auch andere Kohlenwasserstoffverbindungen eingesetzt werden.

Das so erhaltene Synthesegas kann erfindungsgemäß in einem weiteren Teilverfahren unter Beimischung von Wasser (oder Wasserdampf) nach der Reaktionsgleichung

(I) CₙH₂ₙ₊₂ + n·H₂O → n ·CO + (2n + 1) ·H₂

umgesetzt werden, wodurch der Wasserstoffgehalt des Synthesegases erhöht bzw. das CO/H₂-Verhältnis verringert wird.

Die vorstehend beschriebenen (Teil-)Verfahren zur Herstellung von Synthesegas werden vorzugsweise plasmakatalysiert durchgeführt, d. h. unter Verwendung von Plasmareaktoren, insbesondere mikrowellengestützten Plasmareaktoren.

Vorzugsweise werden die beiden vorstehend beschriebenen Teilverfahren in einem gemeinsamen Plasmareaktor kombiniert durchgeführt, wobei die erwähnte Anreicherung mit Kohlenwasserstoffen in der Weise erfolgen kann, dass diese Kohlenwasserstoffe mit dem Eduktgas vermischt oder separat in den Plasmareaktor eingeleitet werden.

Im Hinblick auf das oben Gesagte erstreckt sich die vorliegende Erfindung auch auf ein Verfahren zur Herstellung von Synthesegas aus einem kohlenwasserstoffhaltigen und kohlendioxidhaltigen Eduktgas, insbesondere einem Pyrolyse- oder Flare-Gas, welches CO₂ im Überschuss - bezogen auf den Kohlenwasserstoffanteil (in Vol.-%) - enthält, wobei das Verfahren zumindest die folgenden Schritte aufweist:
- Anreichern des Eduktgases mit vorzugsweise gasförmigen Kohlenwasserstoffen oder einem kohlenwasserstoffhaltigen Gas (insbesondere Methan, Ethan, Propan, Butan; Erdgas);
- Umsetzung, vorzugsweise plasmakatalytische Umsetzung, des mit Kohlenwasserstoffen angereicherten Eduktgases zu einem CO und H₂ enthaltenden Synthesegas, wahlweise unter Beimischung von H₂O.

Vielfach stellt sich das Problem, dass die zur Verfügung stehenden Eduktgase einen zu geringen Kohlenwasserstoffgehalt (z. B. weniger als 25 Vol.-%, insbesondere weniger als 10 Vol.-%) oder einen zu hohen CO₂-Gehalt (z. B. mehr als 30 Vol-%, insbesondere mehr als 50 Vol.-%) aufweisen und deshalb für die Herstellung von Synthesegas wenig geeignet sind. Gemäß vorliegender Erfindung ist deshalb vorgesehen, dass derartige Eduktgase vor ihrer Verwendung zur Synthesegasherstellung, oder während der Umsetzung, insbesondere der plasmakatalytischen Umsetzung, zu Synthesegas mit Kohlenwasserstoffen angereichert werden, vorzugsweise mit gasförmigen Kohlenwasserstoffen oder einem kohlenwasserstoffhaltigen Gas (insbesondere Methan, Ethan, Propan, Butan; Erdgas). Die Anreicherung erfolgt vorzugsweise durch Beimischen von Kohlenwasserstoffen zu dem jeweiligen Eduktgas, oder durch Einspeisen in den Reaktor oder Plasmareaktor, in dem die Umsetzung zu Synthesegas erfolgt.

Bei der Herstellung von Synthesegas kann erfindungsgemäß auch ein Pyrolyseöl als Kohlenstoffquelle genutzt werden. Pyrolyseöl entsteht als flüssiges Nebenprodukt bei der pyrolytischen Zersetzung z. B. von Biomasse; es enthält neben Wasser eine Vielzahl von organischen Verbindungen, wie z. B. Alkohole, Phenole, Carbonsäuren, Ketone und Aldehyde.

Vorzugsweise erfolgt die Erzeugung von Synthesegas aus Pyrolyseöl in der Weise, dass das Pyrolyseöl in einem Plasmareaktor, insbesondere einem mikrowellengestützten Plasmareaktor, umgesetzt wird. Zur Einstellung eines gewünschten CO/H₂-Verhältnisses kann dem Pyrolyseöl vor oder während der plasmakatalytischen Umsetzung CO₂ und/oder H₂O beigemischt werden (wie bereits weiter oben beschrieben), beispielsweise indem diese Reaktanden über entsprechende Zuleitungen in den Plasmareaktor eingeleitet werden. Im Hinblick auf das oben Gesagte erstreckt sich die vorliegende Erfindung auf ein Verfahren zur Herstellung von Synthesegas aus einem kohlenwasserstoffhaltigen (Pyrolyse-)öl, wobei das Verfahren die Schritte von Anspruch 1 aufweist.

Das Öl kann z. B. als Dampf oder als Aerosol in den Reaktor eingebracht werden.
Die in obiger Beschreibung beschriebenen Verfahren und Teilverfahren können je nach Anwendungsfall in unterschiedlicher Weise untereinander kombiniert werden. Des Weiteren kann jede der beschriebenen Ausführungsformen mit einem oder mehreren Merkmal(en) aus der vorangehenden Beschreibung der Erfindung kombiniert werden. Ferner ist vorgesehen, dass die erfindungsgemäßen Verfahren zur Herstellung von Synthesegas mit nachfolgenden Syntheseverfahren kombiniert werden, bei denen das erzeugte Synthesegas als Edukt oder Zwischenprodukt eingesetzt wird.

Die Erfindung erstreckt sich auch auf Verfahren der vorstehend beschriebenen Art, bei denen kein vollständiger Umsatz der eingesetzten Edukte zu den gewünschten Produkten, insbesondere Synthesegas, erfolgt. In vielen Fällen genügt bereits eine teilweise Umsetzung, um eine entsprechende Wertschöpfung zu generieren.

Bei unvollständiger oder nur teilweiser Umsetzung der Edukte (z. B. Kohlenwasserstoffe, CO₂, CO, H₂O) können die nicht umgesetzten Edukte bzw. Bestandteile wieder in das Verfahren zurückgeführt werden, ggf. nach vorheriger Abtrennung aus dem Produktstrom (Synthesegas). Auch die bei nachfolgenden Syntheseprozessen anfallenden Restmengen, insbesondere Restgasen, von nicht umgesetzten Reaktanden (z. B. H₂, CO, CO₂) können wieder in ein erfindungsgemäßes Verfahren oder Teilverfahren zur Herstellung von Synthesegas zurückgeführt (rezykliert) werden.

Beispielsweise fallen bei der katalytischen (oder plasmakatalytischen) Umsetzung von Synthesegas zu Methanol und Dimethylether nichtumgesetztes Synthesegas (H₂, CO) und CO₂ als Restgase an, die wieder als Edukte zur Herstellung von Synthesegas, wie oben beschrieben, verwendet werden können. Hierdurch kann ein nahezu 100%iger Stoffumsatz erreicht werden.

Die mit den vorstehend beschriebenen, erfindungsgemäßen Verfahren erzeugten Synthesegasprodukte können als Ausgangsstoffe oder Zwischenprodukte in einer Vielzahl von Synthesen eingesetzt werden, z. B. bei der Oxosynthese (Hydroformylierung), FISCHER-TROPSCH-Synthesen oder REPPE-Synthesen.

Eine Vorrichtung, die für die Durchführung des Verfahrens geeignet ist, weist zumindest folgende Bestandteile auf:
- einen Plasmareaktor (R₁), insbesondere einen Mikrowellenplasmareaktor, zur plasmakatalytischen Umsetzung eines kohlenwasserstoffhaltigen Edukts und gegebenenfalls weiteren Reaktanden zu einem Synthesegas,
- mindestens einen weiteren Reaktor (R₂), vorzugsweise einen Plasmareaktor, der dem oben genannten Plasmareaktor (R₁) nachgeschaltet und mit diesem über mindestens eine Leitung verbunden ist, zur weiteren Umsetzung des im Plasmareaktor (R₁) erzeugten Synthesegases zu einem Synthesegasprodukt;
- Einrichtungen zum Messen des CO-Gehaltes oder/und des H₂-Gehaltes zumindest des im Plasmareaktor (R₁) erzeugten Synthesegases, oder zum Messen des CO-Gehaltes oder/und des H₂-Gehaltes des im Plasmareaktor (R₁) erzeugten Synthesegases und des im weiteren Reaktor (R₂) erzeugten Synthesegasprodukts.
Hierbei kann die plasmakatalytische Umsetzung im Plasmareaktor (R₁) beispielsweise mindestens ein Teilverfahren nach einer der weiter oben erwähnten Reaktionsgleichungen (I), (Ia), (II) und (IIa), oder insbesondere eine Kombination von (I) mit (II), umfassen, und die Umsetzung im nachgeschalteten Reaktor (R₂) kann beispielsweise ein Teilverfahren nach einer der weiter oben erwähnten Reaktionsgleichungen (III) oder (IV) umfassen. Die Vorrichtung ermöglicht die kombinierte Durchführung mindestens zweier Teilverfahren mittels (mindestens) zweier miteinander verbundener (hier: hintereinander geschalteter) Reaktoren.

Optional kann ein Zwischenspeicher für das im Plasmareaktor (R₁) erzeugte Synthesegas vorgesehen sein, in dem das Synthesegas vor der Weiterleitung in den Reaktor (R2) gespeichert wird.

Einrichtungen zum Messen des CO- und H₂-Gehalts, wie z. B. Gassensoren, Mess-Sonden und dazugehörige Messgeräte sind dem Fachmann bekannt und im Handel erhältlich.

Die Vorrichtung weist Einrichtungen auf, die eine Ermittlung der CO/H₂-Verhältnisse auf Basis der gemessenen CO-Gehalte und H₂-Gehalte ermöglichen, sowie Einrichtungen, die es ermöglichen, den Durchsatz im Plasmareaktor (R₁) oder/und im weiteren Reaktor (R₂) in Abhängigkeit von den ermittelten Werten für das CO/H₂-Verhältnis so zu steuern oder zu regeln, dass ein Synthesegasprodukt mit dem gewünschten CO/H₂-Verhältnis erhalten wird. Die erwähnten Einrichtungen können insbesondere durch Schaltungen, Mikroprozessoren, Computer und -software verwirklicht sein. Alternativ oder zusätzlich kann eine Steuerung oder Regelung des CO/H₂-Verhältnis im Synthesegasprodukt auch dadurch erfolgen, dass in Abhängigkeit von den ermittelten CO-Gehalten und H₂-Gehalten (bzw. des daraus resultierenden Verhältnisses) die Reaktionsbedingungen, insbesondere Temperatur oder/und Druck im Reaktor bzw. den Reaktoren entsprechend variiert werden, oder indem die Menge der zur Synthesegasherstellung eingesetzten Reaktanden (z. B. CO₂, H₂O) variiert wird.

Eine Vorrichtung weist zumindest folgende Bestandteile auf:
- einen ersten Plasmareaktor (R₁), insbesondere einen Mikrowellenplasmareaktor, zur Umsetzung eines kohlenwasserstoffhaltigen Edukts und gegebenenfalls weiteren Reaktanden zu einem ersten Synthesegas (A) mit einem ersten molaren CO/H₂-Verhältnis (V₁),
- mindestens einen weiteren Reaktor (R₂), vorzugsweise einen Plasmareaktor, zur Umsetzung eines kohlenwasserstoffhaltigen Edukts und gegebenenfalls weiteren Reaktanden zu einem zweiten Synthesegas (B) mit einem zweiten molaren CO/H₂-Verhältnis (V₂),
- Einrichtungen zum Zusammenführen oder Mischen der Synthesegase (A, B), um ein Synthesegasprodukt mit einem gewünschten molaren CO/H₂-Verhältnis zu erhalten,
   sowie
- Einrichtungen zum Messen des CO-Gehaltes oder/und des H₂-Gehaltes zumindest des im Reaktor (R₁) erzeugten Synthesegases und des im Reaktor (R₂) erzeugten Synthesegases, optional zusätzlich Einrichtungen zum Messen des CO-Gehaltes oder/und des H₂-Gehaltes des durch Vereinigen der Synthesegase gebildeten Synthesegasprodukts.

Hierbei kann die plasmakatalytische Umsetzung im Plasmareaktor (R₁) beispielsweise mindestens ein Teilverfahren nach einer der weiter oben erwähnten Reaktionsgleichungen (I) oder (Ia) umfassen, und die Umsetzung im Reaktor (R₂) kann beispielsweise mindestens ein Teilverfahren nach einer der weiter oben erwähnten Reaktionsgleichungen (II) oder (IIA) umfassen, oder umgekehrt.
Die Vorrichtung ermöglicht die kombinierte Durchführung von zwei oder mehreren Teilverfahren; dies wird durch eine kombinierte Anordnung von mindestens zwei Reaktoren (R₁, R₂ ...) erreicht, die beispielsweise durch Rohrleitungen derart miteinander verbunden sind, dass die in den jeweiligen Reaktoren erzeugten Produktströme zusammengeführt werden können. Vorzugsweise werden die Reaktoren (R₁, R₂ ...) parallel und kontinuierlich betrieben.

Optional kann ein Zwischenspeicher für das im Plasmareaktor (R₁) erzeugte Synthesegas (A), oder/und ein Zwischenspeicher für das im Plasmareaktor (R₂) erzeugte Synthesegas (B) vorgesehen sein, in dem das Synthesegas vor dem Zusammenführen oder Mischen gespeichert wird.

Einrichtungen zum Zusammenführen oder Mischen von Stoffen, insbesondere fluiden oder gasförmigen Stoffen (hier: Synthesegase) sind dem Fachmann bekannt, z. B. Rohrleitungen, Mischer und/oder Mischventile. Die genannten Einrichtungen ermöglichen es, die in den Teilverfahren erzeugten Synthesegase (A, B, ...) zusammenzuführen und in einem bestimmten Verhältnis zu mischen, um ein Synthesegasprodukt mit einem gewünschten molaren CO/H₂-Verhältnis zu erhalten.

Die Vorrichtung weist Einrichtungen zur Ermittlung des CO/H₂-Verhältnisses auf Basis der gemessenen CO-Gehalte und H₂-Gehalte, sowie Einrichtungen zum Regeln oder Steuern des Durchsatzes im Reaktor (R₁) oder/und im weiteren Reaktor (R₂) auf.

Vorzugsweise sind die Einrichtungen zum Zusammenführen oder Mischen der Synthesegase (A, B, ...) steuerbar oder regelbar sind, so dass das Einstellen oder Regeln des Mischungsverhältnisses ermöglicht wird, und zwar vorzugsweise in Abhängigkeit von den ermittelten Werten für das molare CO/H₂-Verhältnis der Synthesegase (A, B). Auf diese Weise lässt sich ein Synthesegasprodukt mit einem gewünschten und/oder konstanten CO/H₂-Verhältnis herstellen.

Steuerungen oder Regeleinrichtungen, mit denen die Einrichtungen zum Zusammenführen oder Mischen der Synthesegase gesteuert oder geregelt werden können, sind dem Fachmann grundsätzlich bekannt; hierfür kommen insbesondere Regelventile, Schaltungen, Mikroprozessoren, Computer und Software sowie andere Mittel und Methoden der Automatisierungstechnik in Betracht.

Als Plasmareaktoren, welche für die erfindungsgemäßen Verfahren verwendet werden können, kommen insbesondere Vorrichtungen in Betracht, die folgende Merkmale aufweisen:
- eine Plasmakammer, in der ein im wesentlichen rohrförmiger, ein- oder beidseitig offener Rezipient angeordnet ist, der aus einem mikrowellendurchlässigen, dielektrischen Material besteht, wobei der Innenraum des Rezipienten als Reaktionsraum dient;
- eine oder mehrere Einlassöffnungen und/oder Zuleitungen zum Einleiten eines kohlenwasserstoffhaltigen Edukts und optional weiteren, insbesondere gasförmigen Reaktanden, in den Reaktionsraum;
- einer oder mehreren Auslassöffnungen und/oder Ableitungen zum Ableiten des das/die Umsetzungsprodukt(e) (insbesondere CO, H₂) enthaltenden Produktstroms aus dem Reaktionsraum;
- eine an der Plasmakammer angeordnete und/oder mit dieser in Verbindung stehende Plasmaquelle, insbesondere eine Mikrowellenplasmaquelle, zur Erzeugung eines Plasmas in der Plasmakammer und zur plasmakatalytischen Umsetzung der Edukte bzw. Reaktanden.

Der freie Durchmesser des rohrförmigen Rezipienten beträgt mindestens 4 cm; dieser Durchmesser kann auch größer sein, insbesondere z. B. 6 bis 20 cm oder mehr betragen. Es wurde überraschenderweise gefunden, dass durch eine derartige Dimensionierung des dielektrischen Rohres (Rezipient; insbesondere aus Quarzglas) die Energie-Effizienz und die Selektivität der Plasmaprozesse, insbesondere der erfindungsgemäßen Verfahren, erheblich verbessert werden können.
Die in obiger Beschreibung beschriebenen Vorrichtungen, deren Einzelkomponenten, technische Merkmale etc. können je nach Anwendungsfall in unterschiedlicher Weise untereinander kombiniert werden. Des Weiteren kann jede der beschriebenen Ausführungsformen mit einem oder mehreren Merkmal (en) aus der vorangehenden Beschreibung der Erfindung kombiniert werden. Ferner ist vorgesehen, dass die Vorrichtungen zur Herstellung von Synthesegas mit nachfolgenden Vorrichtungen, z. B. Reaktoren, zur Durchführung von Syntheseverfahren kombiniert werden, bei denen das erzeugte Synthesegas als Edukt oder Zwischenprodukt eingesetzt wird.

Die erfindungsgemäßen Verfahren werden anhand der nachfolgend beschriebenen, schematischen Zeichnungen veranschaulicht:

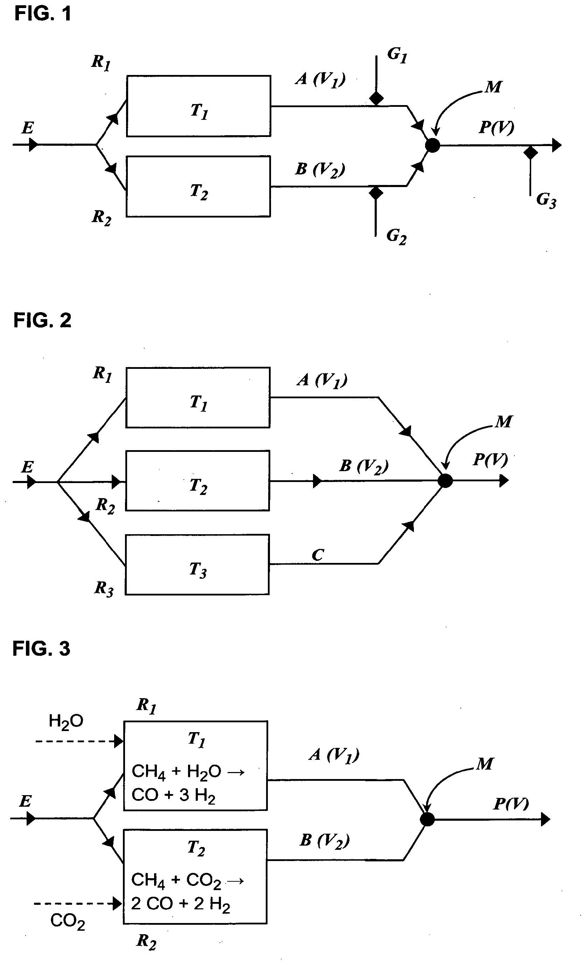

Fig. 1 zeigt das Prinzip eines Verfahrens, bei dem ein kohlenwasserstoffhaltiges Edukt (E) in zwei Teilströme aufgeteilt wird. Das Edukt wird in zwei unterschiedlichen, miteinander kombinierten Teilverfahren (T₁, T₂), die in zwei Reaktoren (R₁, R₂) durchgeführt werden, zu Synthesegasen (A, B) mit einem molaren CO/H₂-Verhältnis V₁ bzw. V₂ umgesetzt (V₁ < V₂ oder V₁ > V₂). Als Reaktoren (R₁, R₂) werden vorzugsweise Plasmareaktoren, insbesondere Mikrowellenplasmareaktoren, verwendet. Als Teilverfahren T₁, T₂ kommen insbesondere Verfahren in Betracht, die auf den oben erwähnten Reaktionsgleichungen (I), (Ia), (II) und (IIa) beruhen.
   Dies so erhaltenen Synthesegasströme werden in einer einstellbaren oder regelbaren Mischeinrichtung (M) zusammengeführt, so dass ein Synthesegasprodukt (P) mit einem molaren CO/H₂-Verhältnis (V) resultiert.
   Zur Messung des CO- und H₂-Gehalts und zur Ermittlung des CO/H₂-Verhältnisses in den Synthesegasströmen der Teilverfahren (T₁, T₂) und im Synthesegasprodukt (P) sind Gas-sensoren (G₁, G₂, G₃) mit entsprechenden Messeinrichtungen und Auswertungseinheiten angebracht. Mittels damit verbundener Steuer- oder Regeleinrichtungen wird der Durchsatz in den Reaktoren (R₁, R₂) und/oder das Mischungsverhältnis in der Mischeinrichtung (M) gesteuert oder geregelt, so dass ein Synthesegasprodukt (P) mit einem gewünschten, vorzugsweise konstanten CO/H₂-Verhältnis (V) resultiert.
Fig. 2 zeigt das Prinzip einer Ausführungsform des erfindungsgemäßen Verfahrens, wobei - in Abwandlung der in Fig. 1 gezeigten Ausführungsform - eine Kombination mit einem dritten Teilverfahren T₃ vorgesehen ist. Hierbei kann es sich beispielsweise um ein Verfahren handeln, das auf der oben erwähnten Reaktionsgleichung (IV) oder (IVa) beruht (plasma-)pyrolytische Zersetzung unter Bildung von festem Kohlenstoff und H₂). Wie in Fig. 1 gezeigt, können Gassensoren mit dazugehörigen Messeinrichtungen, Auswertungseinheiten, Steuer- oder Regeleinrichtungen usw. vorgesehen sein (in Fig. 2 nicht dargestellt).
Fig. 3 zeigt das Prinzip einer weiteren Ausführungsform des erfindungsgemäßen Verfahrens wobei - als konkretes Beispiel für die in Fig. 1 gezeigte Verfahren - als Teilverfahren T₁ ein Verfahren verwendet wird, das auf der Reaktionsgleichung

   (Ia) CH₄ + H₂O → CO + 3 H₂

   beruht (Wasserdampfreformierung), und wobei als Teilverfahren T₂ ein Verfahren verwendet wird, das auf der Reaktionsgleichung

   (IIa) CH₄ + CO₂ → 2 CO + 2 H₂

   ("trockene Reformierung") beruht. Als kohlenwasserstoffhaltiges Edukt wird in diesem Fall Methan oder ein methanhaltiges Gasgemisch (z. B. Erdgas, Biogas) verwendet.
   Die für diese Umsetzungen benötigten Reaktanden (H₂O, CO₂) werden, soweit erforderlich, über entsprechende Zuleitungen in den jeweiligen Reaktor (R₁, R₂) eingespeist.
   Wie in Fig. 1 gezeigt, können Gassensoren mit dazugehörigen Messeinrichtungen, Auswertungseinheiten, Steuer- oder Regeleinrichtungen usw. vorgesehen sein (in Fig. 3 nicht dargestellt). Dabei kann auch von der Möglichkeit Gebrauch gemacht werden, dass die Beimischung von H₂O oder/und CO₂ in Abhängigkeit von den ermittelten Werten für das CO/H₂-Verhältnis gesteuert oder geregelt wird.

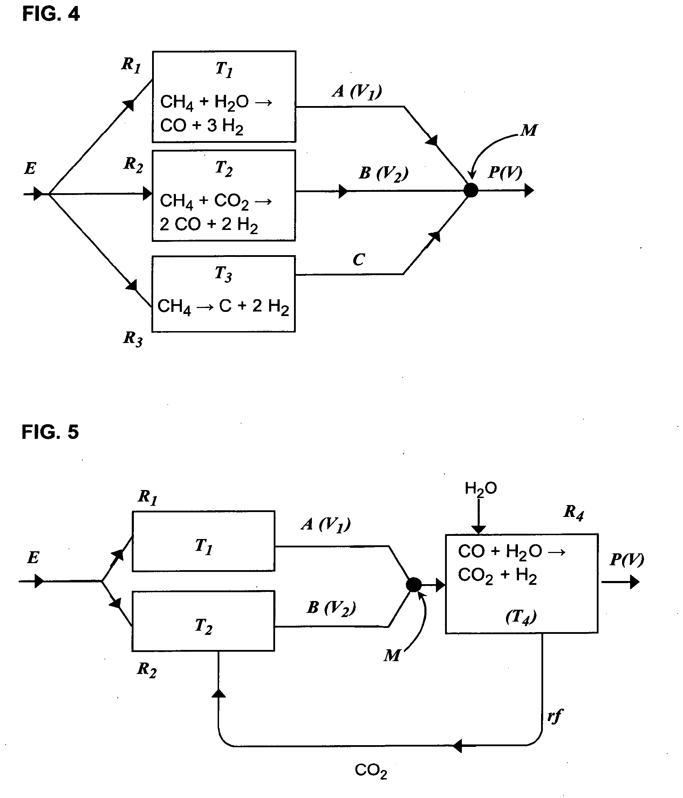

Fig. 4 zeigt das Prinzip einer weiteren Ausführungsform des erfindungsgemäßen Verfahrens basierend auf Fig. 2 und Fig. 3, wie oben beschrieben. Als Teilverfahren T₃ kommt ein Verfahren zur pyrolytischen Zersetzung von Kohlenwasserstoffen gemäß nachfolgender Reaktionsgleichung

   (IVa) CH₄ → C_{fest} + 2 H₂

   zum Einsatz.
Fig. 5 zeigt das Prinzip einer weiteren Ausführungsform des erfindungsgemäßen Verfahrens in Abwandlung der in Fig. 1 gezeigten Verfahren, wie oben beschrieben. Hier ist ein zusätzlicher Reaktor R₄ vorgesehen, der den beiden Reaktoren R₁, R₂ nachgeschaltet ist. In diesem Reaktor wird das durch Mischen (M) der in den Teilverfahren (T₁, T₂) bzw. Reaktoren (R₁, R₂) gebildeten Synthesegasströme (A, B) gebildete Synthesegas einem weiteren Teilverfahren (T₄) unterzogen, das eine Wassergas-Shift-Reaktion (Reaktionsgleichung (III)) umfasst. Das CO₂ aus dem Teilverfahren (T₄) kann ggf. zum Teilverfahren (T₂) als Eduktgas zurückgeführt werden (Leitung (rf) in Fig. 5).

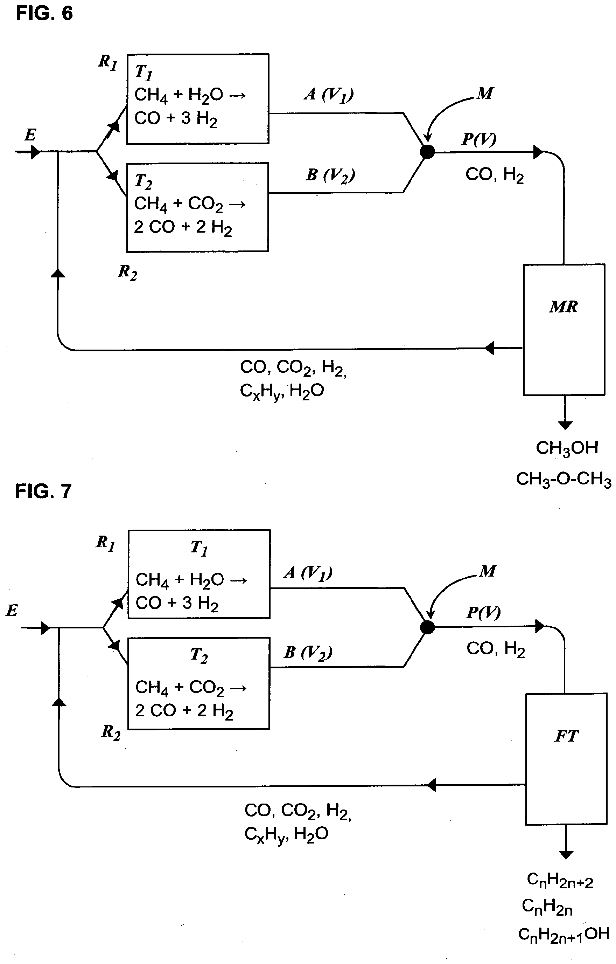

Fig. 6 zeigt das Prinzip einer weiteren Ausführungsform des erfindungsgemäßen Verfahrens in Abwandlung der in Fig. 3 gezeigten Ausführungsform, wie oben beschrieben. Das durch Mischen (M) der beiden Synthesegas-Teilströme erzeugte Synthesegasprodukt (CO, H₂) wird in einem weiteren Reaktor (MR) zur (katalytischen) Methanol- und Dimethylethersynthese eingesetzt. Nicht umgesetztes Synthesegas und bei der Synthese anfallendes CO₂ werden als Restgas (CO, H₂, CO₂, H₂O, CₓH_{y} (Kohlenwasserstoffe)) an den Anfang der Prozesskette zur Herstellung von Synthesegas zurückgeführt und als Eduktgas eingesetzt oder dem Eduktgas beigemischt. Hierdurch lässt sich ein nahezu 100%iger Stoffumsatz erreichen.
Fig. 7 zeigt eine Variante der in Fig. 6 gezeigten Ausführungsform, wobei das durch Mischen (M) der beiden Synthesegas-Teilströme erzeugte Synthesegasprodukt (CO, H₂) in mindestens einem weiteren Reaktor (FT) in einer FISCHER-TROPSCH-Synthese in Produkte wie flüssige und gasförmige Kohlenwasserstoffe, Alkohole etc. umgesetzt wird. Das anfallende Restgas (kann CO, H₂, CO₂, H₂O, CₓH_{y} enthalten) wird in den Prozess zurückgeführt und wieder als Eduktgas eingesetzt oder dem Eduktgas beigemischt, wie bei Fig. 6 beschrieben.

Die vorstehend beschriebenen, an Hand der Zeichnungen veranschaulichten Ausführungsformen repräsentieren lediglich einige beispielhafte Ausführungsformen und Anwendungsmöglichkeiten der vorliegenden Erfindung. Diese beispielhaften Ausführungsformen können, entweder einzeln oder auch in verschiedenartigen Kombinationen, jeweils den Gegenstand eines oder mehrerer Patentansprüche bilden. Des Weiteren kann jede dieser Ausführungsformen mit einem oder mehreren Merkmal(en) aus der vorangehenden Beschreibung der Erfindung kombiniert werden.

### Liste der Bezugszeichen

A, B, C: Synthesegase bzw. Reaktionsprodukte, erzeugt durch Teilverfahren (T₁, T₂, T₃ usw.)
E: Edukt, kohlenwasserstoffhaltiges Edukt
FT: FISCHER-TROPSCH-Reaktor
G₁, G₂, G₃: Gas-Sensoren
M: Mischeinrichtung
MR: Reaktor für die Synthese von Methanol/Dimethylether
P(V): Synthesegasprodukt mit einem (gewünschten) CO/H₂-Verhältnis
R₁, R₂, R₃, R₄: Reaktoren, Plasmareaktoren
rf: Rückführung (Leitung) für CO₂
T₁, T₂, T₃, T₄: Teilverfahren zur Umsetzung des Edukts
V₁, V₂, V₃: CO/H₂-Verhältnis
V: gewünschtes CO/H₂-Verhältnis des Synthesegasproduktes.

## Patentansprüche

1. Verfahren zur Herstellung eines Synthesegasproduktes mit einem gewünschten, einstellbaren molaren CO/H₂-Verhältnis V, aus einem kohlenwasserstoffhaltigen Edukt (E), **dadurch gekennzeichnet, dass** das kohlenwasserstoffhaltige Edukt (E) in zwei oder drei Teilströme aufgeteilt wird, und dass ein erstes Teilverfahren T₁, mittels welchem aus einem ersten Teilstrom des kohlenwasserstoffhaltigen Edukts in einem ersten Reaktor R₁ ein erstes Synthesegas A erzeugt wird, das ein molares Verhältnis von CO zu H₂ aufweist, das mit V₁ bezeichnet wird,
- mit einem zweiten Teilverfahren T₂ kombiniert wird, mittels welchem aus einem zweiten Teilstrom des kohlenwasserstoffhaltigen Edukts in einem zweiten Reaktor R₂ ein zweites Synthesegas B erzeugt wird, das ein molares Verhältnis von CO zu H₂ aufweist, das mit V₂ bezeichnet wird, wobei V₁ ≠ V₂ ist,
- und optional zusätzlich mit einem Teilverfahren T₃ kombiniert wird, mittels welchem der/die Kohlenwasserstoff(e) eines dritten kohlenwasserstoffhaltigen Teilstroms in einem weiteren Reaktor R₃ im Wesentlichen in festen Kohlenstoff und Wasserstoff gespalten wird/werden,
umfasst,
wobei die gasförmigen Synthesegasprodukte der Teilverfahren, insbesondere die Synthesegase A und B, vereinigt oder zusammengeführt werden, um das Synthesgasprodukt mit dem gewünschten molaren CO/H₂-Verhältnis V zu erhalten, durch Einstellung des Mischungsverhältnisses der gasförmigen Synthesegasprodukte der Teilverfahren, insbesondere der Synthesegase A und B, wobei die Einstellung des Mischungsverhältnisses im kontinuierlichen Betrieb durch eine Änderung der Durchsatzgeschwindigkeit mindestens eines der genannten Teilverfahren erfolgt; und wobei zumindest eines der genannten Teilverfahren (T₁, T₂, T₃) oder zumindest ein Teilschritt des Verfahrens ein Plasmaverfahren, vorzugsweise ein mikrowellengestütztes Plasmaverfahren umfasst oder/und mittels eines Plasmareaktors, insbesondere eines Mikrowellenplasmareaktors, durchgeführt wird.

2. Verfahren nach Anspruch 1, **dadurch gekennzeichnet, dass** V₁ kleiner als V₂ ist, insbesondere, dass V₁ < 1 und V₂ ≥ 1 ist.

3. Verfahren nach einem der vorangehenden Ansprüche, **dadurch gekennzeichnet, dass** mindestens eines der genannten Teilverfahren (T₁, T₂) ein wasserstoffarmes Synthesegas erzeugt, dessen molares Verhältnis von CO zu H₂ mindestens 1 beträgt, und dass mindestens ein anderes Teilverfahren (T₂, T₁) ein wasserstoffreiches Synthesegas erzeugt, dessen molares Verhältnis von CO zu H₂ kleiner oder gleich 1 ist.

4. Verfahren nach Anspruch 3, **dadurch gekennzeichnet, dass** das oder mindestens ein Teilverfahren (T₁, T₂) zur Erzeugung eines wasserstoffreichen Synthesegases auf folgender Reaktionsgleichung beruht:
(I) CₙH₂ₙ₊₂ + n·H₂O → n·CO + (2n + 1)·H₂,
wobei CₙH₂ₙ₊₂ ein Alkan repräsentiert und n vorzugsweise 1 bis 20 beträgt, insbesondere 1 bis 8, besonders bevorzugt 1 bis 4;
und wobei die Reaktion
(Ia) CH₄ + H₂O → CO + 3 H₂
bevorzugt ist.

5. Verfahren nach einem der vorangehenden Ansprüche, **dadurch gekennzeichnet, dass** das oder mindestens ein Teilverfahren (T₁, T₂) zur Erzeugung eines wasserstoffarmes Synthesegases auf folgender Reaktionsgleichung beruht:
(II) CₙH₂ₙ₊₂ + n·CO₂ → 2n ·CO + (n + 1) ·H₂,
wobei CₙH₂ₙ₊₂ ein Alkan repräsentiert und n vorzugsweise 1 bis 20 beträgt, insbesondere 1 bis 8, besonders bevorzugt 1 bis 4;
und wobei die Reaktion
(IIa) CH₄ + CO₂ → 2 CO + 2 H₂
bevorzugt ist.

6. Verfahren nach einem der vorangehenden Ansprüche, **dadurch gekennzeichnet, dass** mindestens eines der genannten Teilverfahren ein wasserstoffarmes Synthesegas (A) gemäß folgender Reaktionsgleichung erzeugt:
(II) CₙH₂ₙ₊₂ + n·CO₂ → 2n ·CO + (n + 1) ·H₂,
wobei CₙH₂ₙ₊₂ ein Alkan repräsentiert und n vorzugsweise 1 bis 20 beträgt, insbesondere 1 bis 8, besonders bevorzugt 1 bis 4;
wobei die Reaktion
(IIa) CH₄ + CO₂ → 2 CO + 2 H₂
bevorzugt ist;
und dass mindestens eines weiteres der genannten Teilverfahren ein wasserstoffreiches Synthesegas (B) gemäß folgender Reaktionsgleichung erzeugt:
(I) CₙH₂ₙ₊₂ + n·H₂O → n ·CO + (2n + 1) ·H₂,
wobei CₙH₂ₙ₊₂ ein Alkan repräsentiert und n vorzugsweise 1 bis 20 beträgt, insbesondere 1 bis 8, besonders bevorzugt 1 bis 4;
wobei die Reaktion
(Ia) CH₄ + H₂O → CO + 3 H₂
bevorzugt ist;
und dass die Synthesegase (A) und (B) vereinigt oder zusammengeführt werden und dabei das Mischungsverhältnis derart eingestellt oder geregelt wird, dass ein Synthesgasprodukt mit dem gewünschten molaren CO/H₂-Verhältnis V erhalten wird.

7. Verfahren nach Anspruch 6, **dadurch gekennzeichnet, dass** das Mischungsverhältnis der Synthesegase A und B dadurch eingestellt wird, dass das eine der beiden Teilverfahren mit einem höheren oder niederen Durchsatz gefahren wird als das jeweilige andere Teilverfahren, wobei bevorzugt wird, dass dasjenige Teilverfahren, welches ein wasserstoffreiches Synthesegas erzeugt, mit einem höheren Durchsatz betrieben wird als das andere Teilverfahren, vorzugsweise mit einem 1,5-fachen bis 10-fachen, besonders bevorzugt mit einem 2-fachen bis 5-fachen Durchsatz, bezogen auf des genannte andere Teilverfahren.

8. Verfahren nach einem der vorangehenden Ansprüche, **dadurch gekennzeichnet, dass** das molare Verhältnis von CO zu H₂ (V₁, V₂, ...) in den durch die Teilverfahren erzeugten Synthesegasen (A, B, ...) bestimmt wird, vorzugsweise kontinuierlich, und dass die Teilverfahren in Abhängigkeit von dem ermittelten Verhältnis so gesteuert oder geregelt werden, dass ein Synthesegas-Produkt mit dem gewünschten CO/H₂-Verhältnis V erhalten wird.

9. Verfahren nach einem der vorangehenden Ansprüche, **dadurch gekennzeichnet, dass** das oder mindestens eines der Teilverfahren (T₃) die pyrolytische Zersetzung von Kohlenwasserstoffen gemäß nachfolgender Reaktionsgleichung bewirkt:
(IV) CₙH₂ₙ₊₂ → n ·C_{fest} + (2n+2) ·H₂;
wobei die Reaktion
(IVa) CH₄ → C_{fest} + 2 H₂
bevorzugt ist.

10. Verfahren nach Anspruch 9, **dadurch gekennzeichnet, dass** die pyrolytische Zersetzung von Kohlenwasserstoffen mit einem Teilverfahren zur Erzeugung eines wasserstoffarmen Synthesegases oder/und mit einem Teilverfahren zur Erzeugung eines wasserstoffreichen Synthesegases kombiniert wird;
wobei das Teilverfahren zur Erzeugung eines wasserstoffarmen Synthesegases auf folgender Reaktionsgleichung beruht:
(II) CₙH₂ₙ₊₂ + n·CO₂ → 2n ·CO + (n + 1) ·H₂,
wobei CₙH₂ₙ₊₂ ein Alkan repräsentiert und n vorzugsweise 1 bis 20 beträgt, insbesondere 1 bis 8, besonders bevorzugt 1 bis 4;
und wobei das Teilverfahren zur Erzeugung eines wasserstoffreichen Synthesegases auf folgender Reaktionsgleichung beruht:
(I) CₙH₂ₙ₊₂ + n·H₂O → n ·CO + (2n + 1) ·H₂,
wobei CₙH₂ₙ₊₂ ein Alkan repräsentiert und n vorzugsweise 1 bis 20 beträgt, insbesondere 1 bis 8, besonders bevorzugt 1 bis 4.

11. Verfahren nach einem der vorangehenden Ansprüche, **dadurch gekennzeichnet, dass** es ein weiteres, nachgeschaltetes Teilverfahren T₄ aufweist, welches auf der Wassergas-Shift-Reaktion (III) beruht und eine Erhöhung des H₂-Anteils in dem Synthesegasprodukt bewirkt.
(III) CO + H₂O → CO₂ + H₂.

12. Verfahren nach einem der vorangehenden Ansprüche, **dadurch gekennzeichnet, dass** als Edukt ein kohlenwasserstoffhaltige Edukt mit einem CO₂-Anteil, vorzugsweise ein Methan und CO₂ enthaltendes Gasgemisch, insbesondere Biogas, Rohbiogas, Flare-Gas oder Pyrolysegas, verwendet wird, und dass das Edukt in einem ersten Teilverfahren nach der Reaktionsgleichung
II) CₙH₂ₙ₊₂ + n·CO₂ → 2n ·CO + (n + 1) ·H₂
zu einem Synthesegas umgesetzt wird, welches in einem zweiten Teilverfahren unter Zusatz von Wasser zu einem wasserstoffreicheren Synthesegas umgesetzt wird, wobei die beiden Teilverfahren vorzugsweise in einem gemeinsamen Plasmareaktor, insbesondere einem Mikrowellenplasmareaktor, kombiniert durchgeführt werden.

13. Verfahren nach einem der vorangehenden Ansprüche, **dadurch gekennzeichnet, dass** als Edukt ein kohlenwasserstoffhaltiges Gas verwendet wird, das - bezogen auf den Kohlenwasserstoffanteil - CO₂ im Überschuss enthält, vorzugsweise ein Pyrolysegas oder Flare-Gas, und dass dieses Eduktgas vor der Verwendung als Edukt oder während der Umsetzung zu Synthesegas mit Kohlenwasserstoffen oder einem kohlenwasserstoffhaltigen Gemisch, vorzugsweise Erdgas, angereichert wird.

## Claims

1. A method for producing a synthesis gas product with a desired, adjustable molar CO/H₂ ratio V, from a hydrocarbon-containing starting material (E), **characterized in that** the hydrocarbon-containing starting material (E) is divided into two or three sub-streams, and that
a first sub-process T₁, by means of which a first synthesis gas A is generated from a first sub-stream of the hydrocarbon-containing starting material in a first reactor R₁, said synthesis gas A having a molar ratio of CO to H₂ which is denoted by V₁,
- is combined with a second sub-process T₂, by means of which a second synthesis gas B is generated from a second sub-stream of the hydrocarbon-containing starting material in a second reactor R₂, which second synthesis gas B has a molar ratio of CO to H₂ which is denoted by V₂, wherein V₁ ≠ V₂,
- and is optionally combined, in addition, with a sub-process T₃, by means of which the hydrocarbon(s) of a third hydrocarbon-containing sub-stream is/are essentially split into solid carbon and hydrogen in a further reactor R₃,
wherein the gaseous synthesis gas products of the sub-processes, in particular synthesis gases A and B, are combined or brought together in order to obtain the synthesis gas product with the desired molar CO/H₂ ratio V, by adjusting the mixing ratio of the gaseous synthesis gas products of **t**he sub-processes, in particular the synthesis gases A and B,
said mixing ratio being set in continuous operation by changing the throughput rate of at least one of said sub-processes;
and wherein at least one of said sub-processes (T₁, T₂, T₃) or at least one sub-step of the method comprises a plasma process, preferably a microwave-assisted plasma process and/or is carried out by means of a plasma reactor, in par**t**icular a microwave plasma reactor.

2. The method according to claim 1, **characterized in that** V₁ is less than V₂, more particularly V₁ < 1 and V₂ ≥ 1.

3. The method according to any one of the preceding claims, **characterized in that** at least one of the sub-processes (T₁, T₂) produces a low-hydrogen synthesis gas, the molar ratio of CO to H₂ of which is at least 1, and that at least one other sub-process (T₂, T₁) generates a hydrogen-rich synthesis gas, the molar ratio of CO to H₂ of which is less than or equal to 1.

4. The method according to claim 3, **characterized in that** **t**he sub-process or at least one sub-process (T₁, T₂) for generating a hydrogen-rich synthesis gas is based on the following reaction equation:
(I) CₙH₂ₙ₊₂ + n ·H₂O → n ·CO + (2n + 1) ·H₂,
wherein CₙH₂ₙ₊₂ represents alkane, and n is preferably 1 to 20, especially 1 to 8, more preferably 1 to 4;
and wherein the reaction
**(**Ia) CH₄ + H₂O → CO + 3H₂
is preferred.

5. The method according to any one of the preceding claims, **characterized in that** the sub-process or at least one sub-process (T₁, T₂) for generating a low-hydrogen synthesis gas is based on the following reaction equation:
(II) CₙH₂ₙ₊₂ + n·CO₂ → 2n ·CO + (n + 1) ·H₂,
wherein CₙH₂ₙ₊₂ represents alkane, and n is preferably 1 to 20, especially 1 to 8, more preferably 1 to 4;
and wherein the reaction
(IIa) CH₄ + CO₂ → 2CO + 2H₂
is preferred.

6. The method according to any one of the preceding claims, **characterized in that** at least one of said sub-processes generates a low-hydrogen synthesis gas (A) in accordance with the following reaction equation:
(II) CₙH₂ₙ₊₂ + n·CO₂ → 2n ·CO + (n + 1) H₂,
wherein CₙH₂ₙ₊₂ represents alkane, and n is preferably 1 to 20, especially 1 to 8, more preferably 1 to 4; wherein the reaction
(IIa) CH₄ + CO₂ → 2 CO + 2 H₂
is preferred;
and that at least one further sub-process of said sub-processes produces a hydrogen-rich synthesis gas (B) according to the following reaction equation:
(I) CₙH₂ₙ₊₂ + n·H₂O → n ·CO + (2n + 1) ·H₂,
wherein CₙH₂ₙ₊₂ represents alkane, and n is preferably 1 to 20, especially 1 to 8, more preferably 1 to 4;
wherein the reaction
(Ia) CH₄ + H₂O → CO + 3 H₂
is preferred;
and that the synthesis gases (A) and (B) are combined or brought together, during which process the mixing ratio is adjusted or automatically controlled in such a way that a synthesis gas product with the desired molar CO/H₂ ratio V is obtained.

7. The method according to claim 6, **characterized in that** the mixing ratio of the synthesis gases A and B is adjusted by running one of the two sub-processes at a higher or lower throughput than the respective other sub-process, it being preferred that the sub-process which generates a hydrogen-rich synthesis gas is operated at a higher throughput than the other sub-process, preferably at a 1.5-fold to 10-fold, particularly preferably at a 2-fold to 5-fold throughput, relative to said other sub-process.

8. The method according to any one of the preceding claims, **characterized in that** the molar ratio of CO to H₂ (V1, V₂, ...) is determined in the synthesis gases (A, B, ...) generated by the sub-processes, preferably continuously, and that the sub-processes are controlled by open-loop or closed-loop control as a function of the determined ratio in such a way that a synthesis gas product having the desired CO/H₂ ratio V is obtained.

9. The method according to any one of the preceding claims, **characterized in that** the sub-process or at least one of the sub-processes (T₃) causes the pyrolytic decomposition of hydrocarbons according to the following reaction equation:
(IV) CₙH₂ₙ₊₂ → n ·C_{solid} + (2n+2) ·H₂;
wherein the reaction
(IVa) CH₄ → C_{solid} + 2 H₂
is preferred.

10. The method according to claim 9, **characterized in that** the pyrolytic decomposition of hydrocarbons is combined with a sub-process for producing a low-hydrogen synthesis gas and/or with a sub-process for producing a hydrogen-rich synthesis gas;
the sub-process for generating a low-hydrogen synthesis gas being based on the following reaction equation:
(II) CₙH₂ₙ₊₂ + n·CO₂ → 2n ·CO + (n + 1) ·H₂,
wherein CₙH₂ₙ₊₂ represents alkane, and n is preferably 1 to 20, especially 1 to 8, more preferably 1 to 4;
and the sub-process for generating a hydrogen-rich synthesis gas being based on the following reaction equation:
(I) CₙH₂ₙ₊₂ + n·H₂O → n·CO + (2n + 1)·H₂,
wherein CₙH₂ₙ₊₂ represents alkane, and n is preferably 1 to 20, especially 1 to 8, more preferably 1 to 4.

11. The method according to any one of the preceding claims, **characterized in that** it has a further, downstream sub-process T₄, which is based on the water-gas shift reaction (III) and causes an increase in the H₂ content in the synthesis gas product.
(III) CO + H₂O → CO₂ + H₂

12. The method according to any one of the preceding claims, **characterized in that** a hydrocarbon-containing starting material with a CO₂ content, preferably a gas mixture containing methane and CO₂, in particular a biogas, raw biogas, flare gas or pyrolysis gas, is used as a starting material, and that the starting material is converted, in a first sub-process, according to the reaction equation
(II) CₙH₂ₙ₊₂ + n·CO₂ → 2n ·CO + (n + 1) ·H₂
into a synthesis gas which is converted in a second sub-process, with the addition of water, into a synthesis gas that is higher in hydrogen, wherein the two sub-processes are preferably carried out in a combined manner in one and the same plasma reactor, in particular a microwave plasma reactor.

13. The method according to any one of the preceding claims, **characterized in that** a hydrocarbon-containing gas which - relative to the hydrocarbon content - contains excess CO₂ is used as the starting material, said gas preferably being a pyrolysis gas or a flare gas, and that said starting material gas, before use as the starting material or during conversion into synthesis gas, is enriched with hydrocarbons or a hydrocarbon-containing mixture, preferably natural gas.

## Revendications

1. Procédé pour la préparation d'un produit de gaz de synthèse présentant un rapport molaire V CO/H₂ souhaité, réglable, à partir d'un produit de départ hydrocarboné (E), **caractérisé en ce que** le produit de départ hydrocarboné (E) est divisé en deux ou trois flux partiels et **en ce qu'**un premier procédé partiel T₁, au moyen duquel un premier gaz de synthèse A, qui présente un rapport molaire de CO à H₂ désigné par V₁, est produit à partir d'un premier flux partiel du produit de départ hydrocarboné dans un premier réacteur R₁,
- est combiné avec un deuxième procédé partiel T₂, au moyen duquel un deuxième gaz de synthèse B, qui présente un rapport molaire de CO à H₂ désigné par V₂ et V₁ ≠ V₂, est produit à partir d'un deuxième flux partiel du produit de départ hydrocarboné dans un deuxième réacteur R₂,
- et est en outre éventuellement combiné avec un procédé partiel T₃, au moyen duquel le(s) hydrocarbure(s) d'un troisième flux partiel hydrocarboné est/sont dissocié(s) dans un autre réacteur R₃ essentiellement en carbone solide et en hydrogène,
les produits gazeux de gaz de synthèse des procédés partiels, en particulier les gaz de synthèse A et B, étant rassemblés ou réunis pour obtenir le produit de gaz de synthèse présentant le rapport molaire V CO/H₂ souhaité, par réglage du rapport de mélange des produits gazeux de gaz de synthèse des procédés partiels, en particulier des gaz de synthèse A et B, le réglage du rapport de mélange ayant lieu dans un fonctionnement continu par une modification du débit d'au moins l'un des procédés partiels mentionnés ; et au moins l'un des procédés partiels mentionnés (T₁, T₂, T₃) ou au moins une étape partielle du procédé comprenant un procédé au plasma, de préférence un procédé au plasma soutenu par des micro-ondes et/ou étant mis(e) en œuvre au moyen d'un réacteur au plasma, en particulier un réacteur au plasma à micro-ondes.

2. Procédé selon la revendication 1, **caractérisé en ce que** V₁ est plus petit que V₂, en particulier **en ce que** V₁ < 1 et V₂ ≥ 1.

3. Procédé selon l'une quelconque des revendications précédentes, **caractérisé en ce qu'**au moins l'un des procédés partiels mentionnés (T₁, T₂) produit un gaz de synthèse pauvre en hydrogène, dont le rapport molaire de CO à H₂ vaut au moins 1 et **en ce qu'**au moins un autre procédé partiel (T₂, T₁) produit un gaz de synthèse riche en hydrogène, dont le rapport molaire de CO à H₂ est inférieur ou égal à 1.

4. Procédé selon la revendication 3, **caractérisé en ce que** le procédé partiel ou au moins un procédé partiel (T₁, T₂) pour produire un gaz de synthèse riche en hydrogène repose sur l'équation de réaction suivante :
(I) CₙH₂ₙ₊₂ + n*H₂O → n*CO + (2n + 1)*H₂,
CₙH₂ₙ₊₂ représentant un alcane et n valant de préférence 1 à 20, en particulier 1 à 8, de manière particulièrement préférée 1 à 4 ; et la réaction
(la) CH₄ + H₂O → CO + 3H₂
étant préférée.

5. Procédé selon l'une quelconque des revendications précédentes, **caractérisé en ce que** le procédé partiel ou au moins un procédé partiel (T₁, T₂) pour produire un gaz de synthèse pauvre en hydrogène repose sur l'équation de réaction suivante :
(II) CₙH₂ₙ₊₂ + n*CO₂ → 2n*CO + (n + 1)*H₂,
CₙH₂ₙ₊₂ représentant un alcane et n valant de préférence 1 à 20, en particulier 1 à 8, de manière particulièrement préférée 1 à 4 ; et la réaction
(IIa) CH₄ + CO₂ → 2CO + 2H₂
étant préférée.

6. Procédé selon l'une quelconque des revendications précédentes, **caractérisé en ce qu'**au moins l'un des procédés partiels mentionnés produit un gaz de synthèse (A) pauvre en hydrogène selon l'équation de réaction suivante :
(II) CₙH₂ₙ₊₂ + n*CO₂ → 2n*CO + (n + 1)*H₂,
CₙH₂ₙ₊₂ représentant un alcane et n valant de préférence 1 à 20, en particulier 1 à 8, de manière particulièrement préférée 1 à 4 ; la réaction
(IIa) CH₄ + CO₂ → 2CO + 2H₂
étant préférée ;
et **en ce qu'**au moins un autre des procédés partiels mentionnés produit un gaz de synthèse (B) riche en hydrogène selon l'équation de réaction suivante :
(I) CₙH₂ₙ₊₂ + n*H₂O → n*CO + (2n + 1)*H₂,
CₙH₂ₙ₊₂ représentant un alcane et n valant de préférence 1 à 20, en particulier 1 à 8, de manière particulièrement préférée 1 à 4 ; la réaction
(Ia) CH₄ + H₂O → CO + 3H₂
étant préférée ;
et **en ce que** les gaz de synthèse (A) et (B) sont rassemblés ou réunis et, ce faisant, le rapport de mélange est réglé ou régulé de manière telle qu'un produit de gaz de synthèse présentant le rapport molaire V CO/H₂ souhaité est obtenu.

7. Procédé selon la revendication 6, **caractérisé en ce que** le rapport de mélange des gaz de synthèse A et B est réglé **en ce qu'**un des deux procédés partiels est mis en œuvre à un débit supérieur ou inférieur à celui de l'autre procédé partiel, où il est préféré que le procédé partiel qui produit un gaz de synthèse riche en hydrogène est mis en œuvre à un débit supérieur à celui de l'autre procédé partiel, de préférence supérieur d'un facteur 1,5 à 10, de manière particulièrement préférée d'un facteur 2 à 5 par rapport à l'autre procédé partiel mentionné.

8. Procédé selon l'une quelconque des revendications précédentes, **caractérisé en ce que** le rapport molaire de CO à H₂ (V₁, V₂, ...) dans les gaz de synthèse (A, B, ...) obtenus par les procédés partiels est déterminé, de préférence en continu, et **en ce que** les procédés partiels sont commandés ou régulés en fonction du rapport déterminé de manière telle qu'un produit de gaz de synthèse présentant le rapport V CO/H₂ souhaité est obtenu.

9. Procédé selon l'une quelconque des revendications précédentes, **caractérisé en ce que** le procédé partiel ou au moins l'un des procédés partiels (T₃) provoque la décomposition pyrolytique d'hydrocarbures selon l'équation de réaction suivante :
(IV) CₙH₂ₙ₊₂ → n*C_{solide} + (2n+2)*H₂ ;
la réaction
(IVa) CH₄ → C_{solide} + 2H₂
étant préférée.

10. Procédé selon la revendication 9, **caractérisé en ce que** la décomposition pyrolytique d'hydrocarbures est combinée avec un procédé partiel pour produire un gaz de synthèse pauvre en hydrogène et/ou avec un procédé partiel pour produire un gaz de synthèse riche en hydrogène ; le procédé partiel pour produire un gaz de synthèse pauvre en hydrogène reposant sur l'équation de réaction suivante :
(II) CₙH₂ₙ₊₂ + n*CO₂ → 2n*CO + (n + 1)*H₂,
CₙH₂ₙ₊₂ représentant un alcane et n valant de préférence 1 à 20, en particulier 1 à 8, de manière particulièrement préférée 1 à 4 ; et le procédé partiel pour produire un gaz de synthèse riche en hydrogène reposant sur l'équation de réaction suivante :
(I) CₙH₂ₙ₊₂ + n*H₂O → n*CO + (2n + 1)*H₂,
CₙH₂ₙ₊₂ représentant un alcane et n valant de préférence 1 à 20, en particulier 1 à 8, de manière particulièrement préférée 1 à 4.

11. Procédé selon l'une quelconque des revendications précédentes, **caractérisé en ce qu'**il présente un autre procédé partiel disposé en aval T₄, qui repose sur une réaction de déplacement du gaz à l'eau (III) et qui provoque une augmentation de la proportion de H₂ dans le produit de gaz de synthèse
(III) CO + H₂O → CO₂ + H₂.

12. Procédé selon l'une quelconque des revendications précédentes, **caractérisé en ce qu'**on utilise, comme produit de départ, un produit de départ hydrocarboné présentant une proportion en CO₂, de préférence un mélange gazeux contenant du méthane et du CO₂, en particulier un biogaz, un biogaz brut, un gaz de torchère ou un gaz de pyrolyse et **en ce que** le produit de départ est transformé, dans un premier procédé partiel, selon l'équation de réaction
(II) CₙH₂ₙ₊₂ + n*CO₂ → 2n*CO + (n + 1)*H₂,
en un gaz de synthèse, qui est transformé dans un deuxième procédé partiel, avec addition d'eau, en un gaz de synthèse plus riche en hydrogène, les deux procédés partiels étant de préférence mis en œuvre de manière combinée dans un réacteur au plasma commun, en particulier un réacteur au plasma à micro-ondes.

13. Procédé selon l'une quelconque des revendications précédentes, **caractérisé en ce qu'**on utilise comme produit de départ un gaz hydrocarboné qui contient du CO₂ en excès par rapport à la proportion d'hydrocarbures, de préférence un gaz de pyrolyse ou un gaz de torchère, et **en ce que** ce gaz de départ est enrichi, avant l'utilisation en tant que produit de départ ou pendant la transformation en gaz de synthèse, en hydrocarbures ou en mélange hydrocarboné, de préférence en gaz naturel.
